Europäisches Patentamt

European Patent Office

Office européen des brevets

(11) Numéro de publication: **0 092 011**
A1

(12) **DEMANDE DE BREVET EUROPEEN**

(21) Numéro de dépôt: 82400698.5

(22) Date de dépôt: 16.04.82

(51) Int. Cl.³: **B 60 P 1/28**

(43) Date de publication de la demande: 26.10.83 Bulletin 83/43

(84) Etats contractants désignés: **DE FR GB IT SE**

(71) Demandeur: **Fortier, Jacques, 479, Rue Thomas Lachute Comté d'Argenteuil, Québec J8H IV9 (CA)**

(72) Inventeur: **Fortier, Jacques, 479, Rue Thomas Lachute Comté d'Argenteuil, Québec J8H IV9 (CA)**

(74) Mandataire: **Nony, Michel, 29, rue Cambacérès, F-75008 Paris (FR)**

(54) **Cale de sécurité pour camions à bascule.**

(57) Cale de sécurité (12) pour camions à benne basculante (6) autour d'un pivot (8), destinée à être montée entre le châssis (4) du camion et la benne (6) en position inclinée. La cale (12) est caractérisée en ce qu'elle comprend un corps (14), des moyens de déplacement (18, 18') montés rotatifs à l'intérieur du corps (14) et s'appuyant sur le châssis (4) pour déplacer le corps (14) suivant la longueur du châssis (4), et un moyen d'entraînement (26) monté pivotant à l'intérieur du corps (14), relié à la benne (6) et engageant les moyens de déplacement (18, 18') pour entraîner ces derniers en rotation lors d'un abaissement de la benne, causant ainsi le déplacement du corps (14) vers l'extrémité arrière du châssis (4) et le blocage de la benne (6) en position inclinée. Cette cale (12) assure le blocage automatique de la benne (6) dans une position inclinée en cas de défaillance du mécanisme hydraulique (10) qui lève la benne (6) et ainsi permet à un mécanicien ou autre ouvrier de travailler en toute sécurité sous la benne (6).

- 1 -

<u>Cale de sécurité pour camions à bascule.</u>

La présente invention concerne une cale de sécurité pour camions à benne basculante, destinée à être montée entre le châssis du camion et la benne en position inclinée, cette cale entrant en jeu lors d'une défaillance du mécanisme hydraulique qui lève la benne et ainsi permettant à un mécanicien ou autre ouvrier de travailler en toute sécurité sous la benne.

Il est bien connu que de nombreux accidents ont été causés par une benne s'abaissant accidentellement ou même s'affaissant sur le châssis du camion suite à une défaillance du mécanisme hydraulique de levée. Des appareils ont déjà été proposés pour bloquer la benne en position inclinée et empêcher de tels accidents. Le brevet américain No 2.427.381 du 16 septembre 1947, par exemple, décrit une bride de serrage sur laquelle un sabot destiné à supporter la benne est monté pivotant; une vis est prévue sur chaque côté de la bride pour fixer solidement cette dernière au châssis du camion et éviter tout coulissement suivant la longueur du châssis. Il est évident qu'un tel appareil requiert un outillage spécial pour être monté de façon sécuritaire sur le châssis et qu'il est assujetti à des contraintes résultant de la force horizontale exercée par la benne et qui a tendance à repousser la bride de son point de fixation.

Il en est de même pour l'appareil décrit dans le brevet américain No 2.082.139 du ler juin 1937, qui comprend un trépied destiné à reposer sur le châssis du camion et comportant à sa partie supérieure un boîtier ouvert à l'intérieur duquel une plaque est montée pivotante. Ce type d'appareil est monté entre le châssis et la benne à un endroit où s'intersectent un longeron et une traverse de la benne, le longeron s'appuyant sur la plaque pivotante avec la traverse s'engageant dans une entaille correspondante pratiquée dans le boîtier. Il s'ensuit que cet appareil ne peut être utilisé qu'à des endroits prédéterminés et bien définis entre le châssis et la benne et, bien qu'il est décrit comme ne pouvant pas coulisser le long du châssis grâce à l'entaille du boîtier coopérant avec la traverse, il n'en demeure pas moins que l'appareil est assujetti à de fortes contraintes horizontales et n'assure en aucune façon un blocage automatique.

La présente invention a pour but de remédier à ces inconvénients et de fournir une cale de sécurité pour camions à benne basculante autour d'un pivot, qui puisse assurer le blocage automatique de la benne dans une position inclinée en cas de défaillance du mécanisme hydraulique de levée de la benne.

La cale selon l'invention est caractérisée en ce qu'elle comprend un corps, des moyens de déplacement montés rotatifs à l'intérieur du corps et s'appuyant sur le châssis du camion pour déplacer le corps suivant la longueur de ce châssis, et un moyen d'entraînement monté pivotant à l'intérieur du corps et s'appuyant sur le châssis de la benne. Le moyen d'entraînement engage les moyens de déplacement de façon à ce que tout pivotement du premier dans un sens entraîne une rotation des seconds dans l'autre sens, ceci assurant le déplacement du corps vers l'extrémité arrière du châssis lors

0092011

- 3 -

d'un abaissement de la benne et causant ainsi un autoblocage de cette dernière en position inclinée.

Suivant un mode de réalisation préféré de l'invention, les moyens de déplacement comprennent un premier cylindre et un second cylindre espacé du premier, ces cylindres étant respectivement montés rotatifs sur des premier et second arbres qui sont parallèles l'un par rapport à l'autre et situés dans un même plan horizontal. D'autre part, le moyen d'entraînement comprend un élément d'appui destiné à s'appuyer contre une membrane de renforcement de la benne et un troisième cylindre relié solidairement à l'élément d'appui et monté pivotant autour d'un troisième arbre à l'intérieur du corps, ce troisième cylindre ayant un axe sensiblement coaxial avec celui du troisième arbre, le troisième cylindre étant parallèle aux premier et second cylindres et étant en contact avec ces derniers.

De préférence, le diamètre de l'alésage du troisième cylindre est sensiblement supérieur au diamètre extérieur du troisième arbre de façon à créer un jeu permettant au troisième cylindre de tourner librement autour du troisième arbre. Un tel arrangement évite tout usure interne du troisième cylindre et ne requiert aucune lubrification.

L'élément d'appui comprend avantageusement une base et deux projections latérales définissant avec la base un profilé en U destiné à recevoir la membrure de renforcement.

L'invention sera mieux comprise à la lecture de la description détaillée ci-après, faite en référence aux dessins ci-joints, dans lesquels:

- 4 -

- la figure 1 illustre un camion à benne basculante
équipée d'une cale selon l'invention, montée entre le châssis
du camion et la benne en position inclinée;

- la figure 2 est une vue de côté de cette cale; et

- la figure 3 est une coupe suivant la ligne 3-3
de la figure 2.

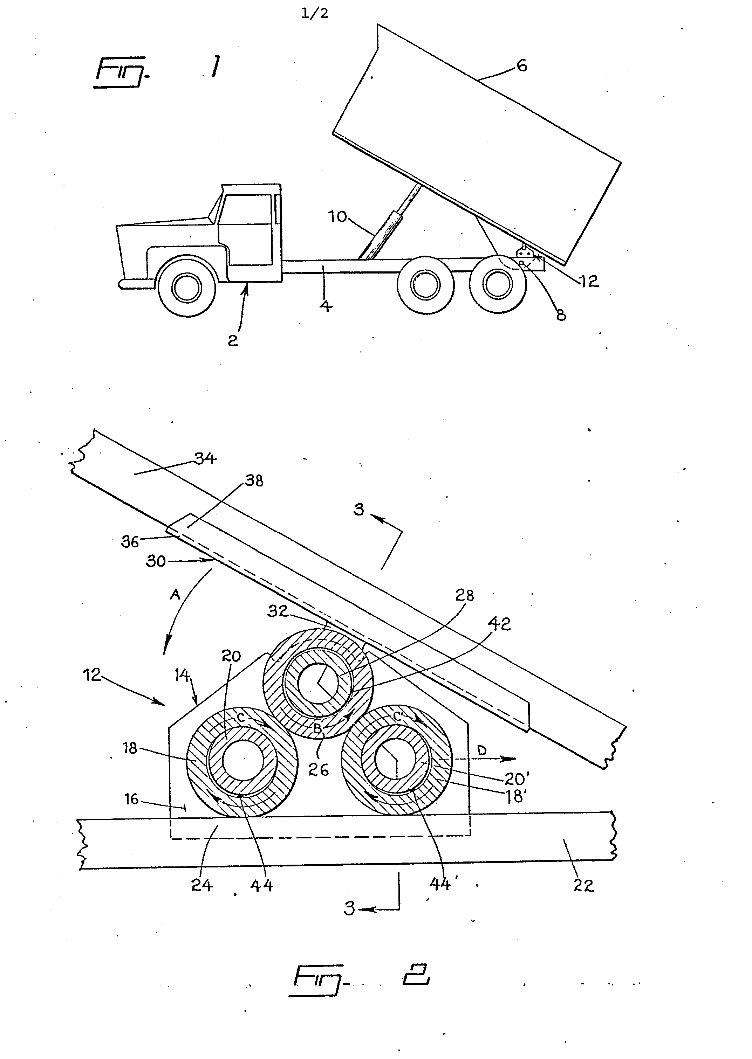

La figure 1 illustre un camion conventionnel 2 muni
d'un châssis 4, à l'arrière duquel une benne 6 bascule autour
d'un pivot 8. Un vérin hydraulique 10 est prévu pour élever
la benne 6 à la position désirée. Afin de bloquer la benne
dans la position inclinée, une cale 12 est montée entre le
châssis 4 et la benne 6.

Comme le montrent en plus amples détails les figures
2 et 3, cette cale 12 comprend un corps 14 constitué de deux
plaques parallèles 16 et 16', espacées l'une de l'autre. Deux
cylindres 18 et 18' sont montés rotatifs respectivement sur des
arbres creux 20 et 20' fixés entre les deux plaques 16 et 16';
les arbres 20 et 20' sont parallèles entre eux et sont
situés dans un même plan horizontal. Les cylindres 18 et 18'
s'appuient sur un longeron 22 du châssis 4 et sont destinés
à déplacer le corps 14 suivant la longueur du châssis. Chacune
des plaques 16 et 16' se prolonge en dessous du point d'appui
de chacun des cylindres 18 et 18' de façon à constituer
respectivement deux guides latéraux 24 et 24' recevant entre eux
le longeron 22.

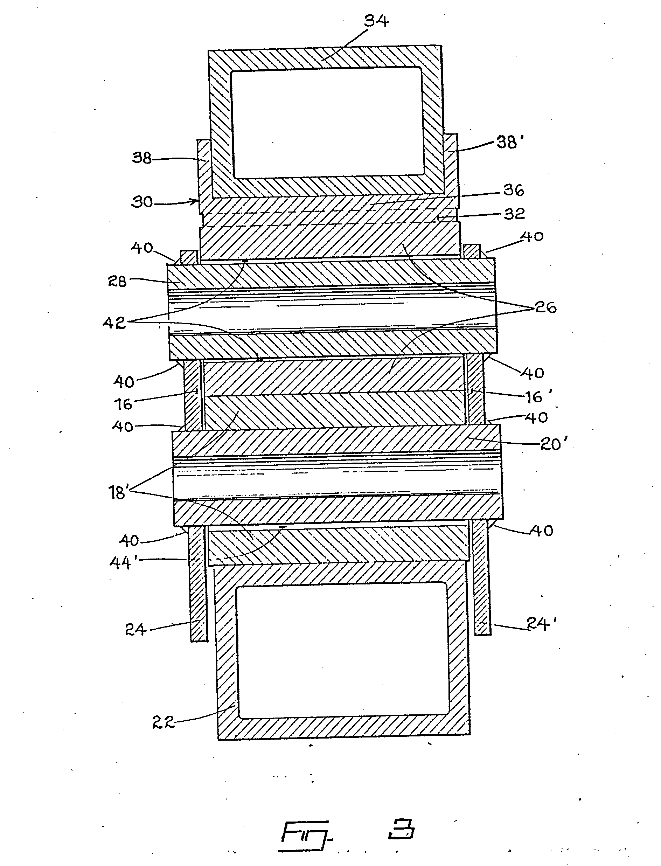

Un troisième cylindre 26 est monté pivotant autour d'un
troisième arbre creux 28 fixé entre les plaques 16 et 16' et est
relié solidairement à un élément d'appui 30 au moyen d'une entretoise 32. L'élément 30 reçoit une membrure de renforcement 34 de la benne 6 et comprend à cette fin une base 36 et deux projections latérales 38 et 38' définissant avec la base 36 un profilé en U. Le cylindre 26 est parallèle aux cylindres 18 et 18' et est en contact avec ces derniers. Les extrémités de chacun des arbres 20, 20' et 28 s'étendent au-delà des plaques 16 et 16' et sont solidement fixées à ces plaques au moyen de soudure 40 (Fig. 3).

Il est à noter que l'axe du cylindre 26 est coaxial avec celui de l'arbre 28 et que le diamètre de l'alésage du cylindre 26 est sensiblement supérieur au diamètre extérieur de l'arbre 28 de façon à créer un jeu 42 permettant au cylindre 26 de tourner librement autour de l'arbre 28. Cet arrangement est particulièrement avantageux puisqu'il n'entraîne aucune usure interne du cylindre 26 et ne nécessite aucune lubrification. On conçoit aisément qu'à la limite, l'arbre 28 pourrait être complètement supprimé sans pour autant nuire au pivotement du cylindre 26 étant donné que ce dernier repose sur les cylindres 18 et 18'. En effet, le rôle de l'arbre 28 est essentiellement de retenir en place le cylindre 26 ainsi que l'élément 30 qui lui est associé, lorsque la cale n'est pas en utilisation.

Des jeux 44 et 44' sont aussi prévus entre l'alésage de chacun des cylindres 18 et 18' et la surface périphérique de chacun des arbres 20 et 20', mais chaque jeu est restreint seulement à une partie inférieure opposée à la partie supérieure de l'arbre 20 ou 20' qui est en contact avec la surface de l'alésage du cylindre 18 ou 18' correspondant. Ceci

- 6 -

est dû au fait que les cylindres 18 et 18' supportent le poids du cylindre 26, de l'élément d'appui 30 et, principalement, de la benne 6 et sont par conséquent repoussés contre leur arbre respectif.

Le fonctionnement de la cale selon l'invention est évident par la figure 2. Lorsque, suite à une défaillance du système hydraulique de levée, la benne s'abaisse de sa position inclinée entraînant avec elle la membrure de renforcement 34, l'élément 30 sur lequel s'appuie la membrure 34 est pivoté suivant la flèche A par l'intermédiaire du cylindre 26 qui, de ce fait, subit une rotation dans le sens indiqué par la flèche B. Ce cylindre à son tour entraîne les cylindres 18 et 18' en rotation dans le sens indiqué par les flèches C et C' respectivement, ce qui a pour effet de déplacer la cale 12 suivant la flèche D vers l'extrémité arrière du châssis et de causer automatiquement le blocage de la benne dans la position inclinée. En d'autres termes, la cale 12 permet de contrebalancer la force horizontale exercée par la benne et qui a tendance à repousser la cale de son point de coinçage, par une force équivalente orientée en sens opposé (flèche D) vers l'extrémité arrière du châssis.

- 7 -

## Revendications de brevet

1.    Cale de sécurité pour camions à benne basculante autour d'un pivot, destinée à être montée entre le
châssis du camion et le châssis de la benne en position
inclinée, caractérisée en ce qu'elle comprend un corps, des
moyens de déplacement montés rotatifs à l'intérieur du corps
et s'appuyant sur le châssis du camion pour déplacer le
corps suivant la longueur de ce châssis, et un moyen d'entraînement monté pivotant à l'intérieur du corps et s'appuyant sur
le châssis de benne,    ledit moyen d'entraînement engageant
lesdits moyens de déplacement de façon à ce que tout pivotement
du premier dans un sens entraîne une rotation des seconds en
sens inverse, ledit engagement assurant le déplacement du
corps vers l'extrémité arrière du châssis lors d'un abaissement
de la benne et causant ainsi un autoblocage de cette dernière
en position inclinée.

2. Cale de sécurité selon la revendication 1,
caractérisée en ce que le corps comporte à sa partie inférieure
deux guides destinés à recevoir entre eux un longeron du châssis,
lesdits moyens de déplacement s'appuyant sur ledit longeron.

3. Cale de sécurité selon la revendication 2,
caractérisée en ce que chacun des guides inférieurs est constitué par un prolongement du corps en dessous du point d'appui
de chacun desdits moyens de déplacement sur ledit longeron.

4. Cale de sécurité selon la revendication 1,
caractérisée en ce que lesdits moyens de déplacement comprennent un premier cylindre et un second cylindre espacé du premier, ces cylindres étant respectivement montés rotatifs sur des premier et second arbres qui sont parallèles l'un par rapport à l'autre et situés dans un même plan horizontal.

5. Cale de sécurité selon la revendication 4, caractérisée en ce que ledit moyen d'entraînement comprend un élément d'appui destiné à s'appuyer contre une membrane de renforcement de la benne et un troisième cylindre relié solidairement audit élément d'appui et monté pivotant autour d'un troisième arbre à l'intérieur du corps, ce troisième cylindre ayant un axe sensiblement coaxial avec celui dudit troisième arbre, ledit troisième cylindre étant parallèle auxdits premier et second cylindres et étant en contact avec ces derniers.

6. Cale de sécurité selon la revendication 5, caractérisée en ce que ledit troisième cylindre est relié audit élément d'appui au moyen d'une entretoise.

7. Cale de sécurité selon les revendications 5 ou 6, caractérisée en ce que ledit élément d'appui comprend une base et deux projections latérales définissant avec la base un profilé en U destiné à recevoir ladite membrure de renforcement.

8. Cale de sécurité selon la revendication 5, caractérisée en ce que le diamètre de l'alésage dudit troisième cylindre est sensiblement supérieur au diamètre extérieur dudit troisième arbre de façon à créer un jeu permettant audit troisième cylindre de tourner librement autour dudit troisième arbre.

9.      Cale de sécurité pour camions à benne basculante autour d'un pivot, destinée à être montée entre le châssis du camion et la benne en position inclinée, caractérisée en ce qu'elle comprend un corps constitué de deux plaques parallèles, espacées l'une de l'autre, et destinées à recevoir entre elles à leur partie inférieure un longeron du châssis; un premier cylindre et un second cylindre espacé du premier, ces cylindres étant respectivement montés rotatifs sur des premier et second arbres fixés entre les deux plaques et s'appuyant sur ledit longeron, lesdits premier et second arbres étant parallèles l'un par rapport à l'autre et situés dans un même plan horizontal; un troisième cylindre monté pivotant autour d'un troisième arbre fixé entre les deux plaques, ce troisième cylindre ayant un axe sensiblement coaxial avec celui dudit troisième arbre, et un élément d'appui ayant un profilé en U, relié solidairement audit troisième cylindre et destiné à recevoir une membrure de renforcement de la benne, ledit troisième cylindre étant parallèle auxdits premier et second cylindres et étant en contact avec ces derniers de façon à les entraîner en rotation lors d'un abaissement de la benne et causer ainsi le déplacement du corps vers l'extrémité arrière du châssis et le blocage de la benne en position inclinée.

10. Cale de sécurité selon la revendication 9, caractérisée en ce que le diamètre de l'alésage dudit troisième cylindre est sensiblement supérieur au diamètre extérieur dudit troisième arbre de façon à créer un jeu permettant audit troisième cylindre de tourner librement autour dudit troisième arbre.

1/2

Fig. 1

Fig. 2

0092011

Fig. 3

Office européen
des brevets

**RAPPORT DE RECHERCHE EUROPEENNE**

Numéro de la demande

EP 82 40 0698

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|-----------|--------------------------------------------------------------------------------|------------------------|-------------------------------------|
| | --- | | B 60 P 1/28 |
| A | US-A-2 274 074 (LAVALIER) *En entier* | 1 | |
| | --- | | |
| A | FR-A-1 063 885 (POISSON) *Figure 3* | 1 | |
| | --- | | |
| A | GB-A- 847 163 (SHARP) *Figures 1,3* | 1 | |
| | --- | | |
| D | US-A-2 427 381 (BORGOGNO) | | |
| | --- | | |
| D | US-A-2 082 139 (BASSETTI) | | |
| | ----- | | |

**DOMAINES TECHNIQUES RECHERCHES (Int. Cl. ³)**

B 60 P 1/28

Le présent rapport de recherche a été établi pour toutes les revendications

| Lieu de la recherche | Date d'achèvement de la recherche | Examinateur |
|----------------------|-----------------------------------|-------------|
| LA HAYE | 21-12-1982 | SCHMITTER J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82